# EUROPÄISCHE PATENTSCHRIFT

(11) **EP 0 642 952 B1**
(45) Veröffentlichungstag und Bekanntmachung des Hinweises auf die Patenterteilung: **05.03.1997**
(21) Anmeldenummer: 94111811.9
(22) Anmeldetag: 29.07.1994
(51) Int. Cl.: B60Q 3/02

(54) **Verfahren und Vorrichtung zur Steuerung einer Fahrzeuginnenraumbeleuchtung**
Method and means for controlling of an interior light for vehicles
Procédé et dispositif pour commander l'éclairage interieur d'un véhicule

(30) Priorität: 10.09.1993 DE 4330721
(43) Veröffentlichungstag der Anmeldung: 15.03.1995
(73) Patentinhaber: MERCEDES-BENZ AG, 70327 Stuttgart (DE)
(72) Erfinder: Andres,Rudolf, Dipl.-Ing., D-71067 Sindelfingen (DE); Stähle, Armin, Dipl.-Ing., D-71154 Nufringen (DE); Mickeler, Reinhold, Dipl.-Ing., D-71155 Altdorf (DE); Grickscheit, Helmut, Dipl.-Ing., D-71063 Sindelfingen (DE); Petri, Volker, Dipl.-Ing., D-71134 Aidlingen (DE); Forstner, Benno, Dipl.-Ing., D-71263 Weil der Stadt (DE); Freerichs, Dieter, Dipl.-Ing., D-75395 Ostelsheim (DE)

(56) Entgegenhaltungen:
- DE-A- 3 125 610
- DE-A- 4 131 425
- DE-A- 4 212 361
- US-A- 4 866 345

## Beschreibung

Die Erfindung bezieht sich auf ein Verfahren zur Steuerung einer Fahrzeuginnenraumbeleuchtung nach dem Oberbegriff des Patentanspruches 1 sowie auf eine Vorrichtung zu dessen Durchführung.

Aus der DE 36 20 861 A1 ist eine Fahrzeuginnenraumbeleuchtung bekannt, die als beleuchtungsrelevanten Fahrzeugzustand die Stellung der Fahrzeugtüren überwacht und durch die beim Öffnen einer Tür die Innenraumbeleuchtung eingeschaltet und beim Schließen dieser Tür zeitverzögert unter allmählichem Erlöschen der Lampe ausgeschaltet wird. Das zeitverzögerte Ausschalten bewirkt, daß die Fahrzeuginsassen auch bei Dunkelheit die für einen Fahrtantritt notwendigen Handlungen, wie z.B. Sicherheitsgurt anlegen, Zündschlüssel einstecken etc., leicht mittels der noch aktivierten Innenraumbeleuchtung vornehmen können. Ein ähnliches Vorgehen, bei dem beim Schließen der Tür die Beleuchtung zunächst um ein bestimmtes Maß zurückgenommen, dann konstantgehalten und schließlich linear abgedimmt wird, ist in der US-Patentschrift 4 866 345 offenbart.

In der DE 33 09 548 C2 ist eine Fahrzeuginnenraumbeleuchtungssteuerung beschrieben, bei der ein Fahrzeugzustand überwacht wird, der durch zwei Bedingungen festgelegt ist, nämlich geöffnete oder geschlossene Fahrzeugtür sowie aus- oder eingeschaltete Zündung. Bei detektiertem Schließen der Tür wird die Innenbeleuchtung zeitverzögert ausgeschaltet. Letzteres erfolgt auch, wenn eine geöffnete Tür und eine ausgeschaltete Zündung detektiert werden, was eine unnötige Aktivierung der Innenraumbeleuchtung bei versehentlich offener Fahrzeugtür verhindert, während bei geöffneter Tür und eingeschalteter Zündung die Innenraumbeleuchtung aktiviert bleibt.

Bei einer Innenraumbeleuchtungsanlage nach der DE 41 31 425 A1 sind eine Einstiegsleuchte, eine Fußraumleuchte sowie eine Sitzleuchte an der Fahrzeugdecke vorgesehen, die bei detektiertem Öffnen der zugeordneten Fahrzeugtür mit in Einstiegsrichtung von Leuchte zu Leuchte ansteigender Leuchtintensität eingeschaltet werden, so daß sich ein Helligkeitsanstieg von der Fahrbahn und der Einstiegsschwelle über den Fahrzeugboden zum Fahrzeugsitz ergibt.

Der Erfindung liegt als technisches Problem die Bereitstellung eines Verfahrens und einer Vorrichtung zur Steuerung der Fahrzeuginnenraumbeleuchtung zugrunde, die eine komfortable und insbesondere der jeweiligen Situation bestmoglich angepaßte Fahrzeuginnenraum-Beleuchtungssteuerung bei gleichzeitig gering gehaltenem konstruktivem Aufwand realisieren.

Dieses Problem wird durch ein Verfahren mit den Merkmalen des Patentanspruches 1 sowie eine Vorrichtung mit den Merkmalen des Patentanspruches 8 gelöst. Das Verfahren berücksichtigt nicht nur einen, z.B. durch das Öffnen oder Schließen einer Fahrzeugtür charakterisierten, Fahrzeugzustand, sondern mehrere derartige, jeweils durch eine oder mehrere abfragbare Zustandsbedingungen, wie z.B. der Zustand der Zündung, der Zentralverriegelung und einer Vorglüheinrichtung sowie die Stellung des Zündschlüssels, festgelegte beleuchtungsrelevante Fahrzeugzustände. Mit an den jeweils detektierten Fahrzeugzustand angepaßt vorgebbaren Dimmparametern aktiviert dann das Verfahren einen Dimmvorgang zum Ein- und/oder Ausschalten der Fahrzeuginnenraumbeleuchtung, wodurch sich letztere in sehr variabler Weise an die gerade vorliegende Situation anpassen läßt. Das Vorsehen einer zentralen Beleuchtungssteuerungseinheit für die Mehrzahl von Steuerungsfunktionen des Verfahrens, dessen Ablauf in einem dortigen Programmspeicher abgelegt ist und nach welchem der steuerbare Schalter angesteuert wird, erfordert nur geringen Konstruktionsaufwand.

In Weiterbildung der Erfindung nach Anspruch 2 besteht ein derartiger beleuchtungsrelevanter Fahrzeugzustand aus einer Kette von mehreren Zustandsbedingungen, die sämtlich vorliegen müssen, bevor eine Beleuchtungssteuerungsaktivierung erfolgt. Beispielsweise kann ein solcher Fahrzeugzustand durch die verketteten Bedingungen einer eingeschalteten Zündung, einer geöffneten Fahrzeugtür und dem Unterschreiten eines bestimmten Grenzwertes für die gemessene Fahrzeuginnenraumhelligkeit bestehen. Eine derartige Weiterbildung ermöglicht es, daß bei Vorliegen einer bestimmten Zustandsbedingung, wie z.B. einer geöffneten Fahrzeugtür, dennoch unterschiedliche Beleuchtungsaktivitäten in Abhängigkeit von weiteren abgefragten Zustandsbedingungen durchführbar sind.

Eine Weiterbildung der Erfindung nach Anspruch 3 bietet die Möglichkeit, die Innenraumbeleuchtung je nach Situation unterschiedlich schnell durch geeignete Wahl einer entsprechenden Ausschaltdimmzeit gedimmt auszuschalten. Zusätzlich kann durch eine Weiterbildung nach Anspruch 4 für das Ausschalten eine fahrzeugzustandsabhängige Verzögerung des Abdimmbeginns erzielt werden.

Bevorzugt ist gemäß Anspruch 5 zum fahrzeugzustandsabhängig gesteuerten Einschalten der Innenraumbeleuchtung die situationsabhängige Vorgabe der Einschaltdimmzeit sowie der sich ergebenden Endhelligkeit als Dimmparameter vorgesehen.

In einer Ausgestaltung der Erfindung nach Anspruch 6 werden die beleuchtungsrelevanten Fahrzeugzustände nach einer Rangfolge geordnet, so daß bei Vorliegen eines Fahrzeugzustands höherer Priorität der diesem zugeordnete Innenraumbeleuchtungs-Steuerungsvorgang gegebenenfalls nach Unterbrechung eines entsprechenden Steuerungsvorgangs für einen Fahrzeugzustand niedrigerer Priorität aktiviert wird.

In Weiterbildung der Erfindung ist gemäß Anspruch 7 vorgesehen, daß als eine jedem der beleuchtungsrelevanten Fahrzeugzustände inhärente Bedingung abgefragt wird, ob die gemessene Fahrzeuginnenraumhelligkeit unterhalb eines vorgewählten Grenzwertes liegt. Damit läßt sich verhindern, daß die Fahrzeuginnenraumbeleuchtung unnötigerweise bei Tageslicht aktiviert wird, wenn eine andere Zustandsbedingung des jeweiligen beleuchtungsrelevanten Fahrzeugzustands, z.B. Öffnen oder Schließen einer Fahrzeugtür, erfüllt ist.

Eine Ausgestaltung nach Anspruch 9 ermöglicht es, die Fahrzeuginnenraumhelligkeit als eine abfragbare Zustandsbedingung des Steuerungsverfahrens heranzuziehen, und zwar gemäß Anspruch 10 bevorzugt in Form eines digitalen, insbesondere zweiwertigen, Hell/Dunkel-Signals.

Die nach Anspruch 11 vorgesehene Anordnung nur einer einzigen Verbindungsleitung sowohl zur Ansteuerung der Beleuchtungseinrichtung als auch zur Übertragung des Helligkeitssensorsignals hält den konstruktiven Aufwand, insbesondere auch die Anzahl im Fahrzeug zu verlegender Leitungen, gering.

Eine bevorzugte Ausführungsform der Erfindung ist in den Zeichnungen dargestellt und wird nachfolgend beschrieben. Es zeigen:
- Fig. 1: ein Blockschaltbild einer Vorrichtung zur Steuerung der Innenraumbeleuchtung eines Kraftfahrzeugs mit Dieselmotor,
- Fig. 2A bis 2C: zusammengehörige Teile des Programmablaufplans, nach welchem die Steuerungsvorrichtung der Fig. 1 arbeitet und
- Fig. 3: zwei Flußdiagramme für zwei in den Fig. 2A bis 2C verwendete Unterprogramme.

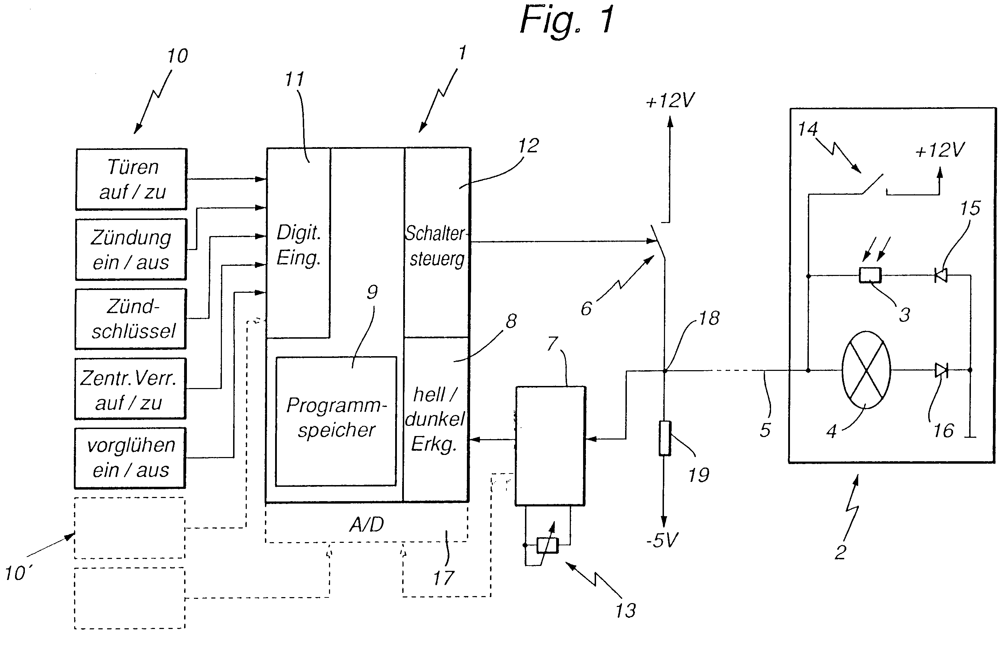

Die Vorrichtung gemäß Fig. 1 enthält eine zentrale Beleuchtungssteuerungseinheit (1), von der explizit ein Programmspeicher-Baustein (9), eine digitale Eingangsgruppe (11), eine Hell/Dunkel-Erkennungsstufe (8) mit digitalem Eingang sowie ein Schaltersteuerungsteil (12) gezeigt sind. Optional enthält die Steuerungseinheit (1) außerdem einen A/D-Wandler (17).

Die digitale Eingangsgruppe (11) ist mit Signalen einer Gruppe (10) voneinander unabhängiger Sensoren verbunden. Jeder Sensor dieser Gruppe (10) fragt das Vorliegen einer bestimmten Zustandsbedingung ab. So sind Sensoren zur Erkennung des geöffneten oder geschlossenen Zustands der Fahrzeugturen, ein Sensor zum Erfassen des Ein- oder Aus-Zustands der Zündung, ein Sensor, der das Abziehen oder Einstecken des Zündschlüssels überwacht, ein Sensor zur Überwachung des abgeschlossenen oder geöffneten Zustands einer Zentralverriegelung sowie ein Sensor angeordnet, der detektiert, ob gerade ein Vorglühvorgang bei dem dieselgetriebenen Fahrzeug stattfindet. Symbolisch für bei Bedarf weitere anzuordnende Sensoren ist eine weitere Sensoreinheit (10') gestrichelt eingezeichnet.

Vom Bereich der Beleuchtungssteuerungseinheit (1) führt eine Verbindungsleitung (5) zu einer Beleuchtungseinheit (2) für den Fahrzeuginnenraum, die eine Lampe (4) als Beleuchtungseinrichtung aufweist. Die Lampe (4) ist mit ihrem einen Anschluß über eine Diode (16) geerdet. Am anderen Anschluß der Lampe (4) liegen ein Ende der Verbindungsleitung (5) sowie über einen handbetätigbaren Schalter (14) ein Bordnetzanschluß (+12V). Durch handbetätigtes Schließen des Schalters (14) ist die Lampe (4) unabhängig von einer steuerungsinduzierten Aktivierung in jedem Fall einschaltbar.

In der Beleuchtungseinheit (2) integriert ist ein Helligkeitssensor (3) in Form eines lichtempfindlichen Widerstands angeordnet. Der Helligkeitssensor (3) ist in Serie mit einer weiteren Diode (15) parallel zur Lampe (4) und deren Diode (16) geschaltet, wobei die beiden Dioden (15, 16) so gepolt sind, daß die dem Helligkeitssensor (3) zugeordnete Diode (15) beim Schließen des Handschalters (14) sperrt, während die der Lampe (4) zugeordnete Diode (16) leitet.

Das andere Ende der Verbindungsleitung (5) führt zu einem Verbindungsknoten (18), der über einen Widerstand (19) mit einer negativen Hilfsspannungsquelle (-5V) sowie über einen von der Beleuchtungssteuerungseinheit (1) ansteuerbaren Schalter (6) mit der Bordnetzspannung (+12V) verbunden ist. Wenn der steuerbare Schalter (6) geöffnet ist, bilden der Widerstand (19) und der lichtempfindliche Widerstand (3) einen Spannungsteiler zwischen Masse und der negativen Hilfsspannung (-5V) mit in Durchlaßrichtung gepolter, dem Helligkeitssensor (3) zugeordneter Diode (15). Am Verbindungsknoten (18) ist daher in diesem Fall eine analoge Spannung abgreifbar, deren Höhe ein Maß für die vom lichtempfindlichen Widerstand (3) gemessene Fahrzeuginnenraumhelligkeit ist. Dieses analoge Spannungssignal ist einer Hell/Dunkel-Signalauswertungseinheit (7) zugeführt, die dieses unter Vorgabe eines Helligkeitsgrenzwertes in ein digitales, zweiwertiges Hell/Dunkel-Signal umwandelt, wozu beispielsweise ein invertierender Verstärker mit anschließendem Komparator vorgesehen sind. Der Helligkeitsgrenzwert läßt sich durch ein Potentiometer (13) an der Hell/Dunkel-Signalauswertungseinheit (7) einstellen. Das digitale Helligkeitssignal der Hell/Dunkel-Signalauswertungseinheit (7) wird dann dem Eingang der Hell/Dunkel-Erkennungsstufe (8) der Beleuchtungssteuerungseinheit (1) zugeführt.

Ist die Beleuchtungssteuerungseinheit (1) mit dem optionalen A/D-Wandler (17) ausgestattet, so kann die Hell/Dunkel-Signalauswertungseinheit (7) dergestalt aufgebaut sein, z.B. durch Verwendung eines invertierenden Verstärkers, daß sie anstelle der digitalen Auswertung oder wahlweise umschaltbar das analoge Spannungssignal analog verstärkt an den A/D-Wandler (17) der Steuerungseinheit (1) weitergibt. Der Helligkeitsgrenzwert wird dann in der zentralen Steuerungseinheit (1) vorgegeben, z.B. im Programmspeicher (9) abgespeichert. In diesem Fall kann die zentrale Steuerungseinheit (1) das ihr zugeführte analoge Helligkeitssignal noch für weitere Funktionen verwenden, ohne daß dieses bereits digitalisiert ist. Wie des weiteren gestrichelt symbolisiert, ist es optional möglich, einen oder mehrere Sensoren in der Sensorgruppe (10) anzuordnen, die ein analoges Sensorsignal abgeben, und diesen oder diese an den A/D-Wandler (17) anzuschließen.

Die zentrale Beleuchtungssteuerungseinheit (1) wertet die an der digitalen Eingangsgruppe (11) ankommenden, bedingungsabfragenden Signale der Sensorgruppe (10) sowie das Helligkeitssignal, das die Hell/Dunkel-Erkennungsstufe (8) bzw. den A/D-Wandler (17) beaufschlagt, gemäß einem im Programmspeicher (9) abgelegten Programm aus und steuert daraufhin in ebenfalls durch dieses Programm festgelegter Weise über den Schaltersteuerungsteil (12) den steuerbaren Schalter (6) an. Durch das Schließen des steuerbaren Schalters (6) liegt der eine Anschluß der Lampe (4) über die Verbindungsleitung (5) am Bordnetz (+12V), so daß die Lampe (4) eingeschaltet wird. Durch getaktetes Ein- und Ausschalten des steuerbaren Schalters (6), der z.B. als MOS-Feldeffekttransistor realisiert sein kann, läßt sich über das Verhältnis der Einschaltdauer zur Gesamtdauer eines Taktes sowie einer geeigneten zeitlichen Veränderung dieses Verhältnisses durch Pulsweitenmodulation die Helligkeit und der zeitliche Helligkeitsverlauf in gewünschter Weise zur Gewährleistung einer beabsichtigten Dimmfunktion einstellen. Damit ein flimmerfreier Eindruck entsteht, sollte die Schaltfrequenz größer als ungefähr 60 Hz sein.

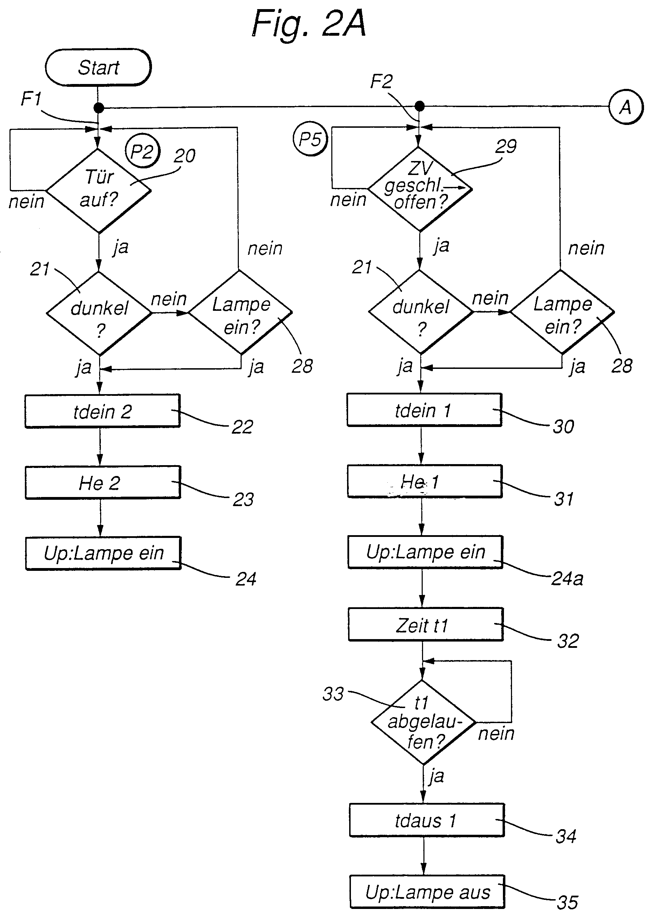

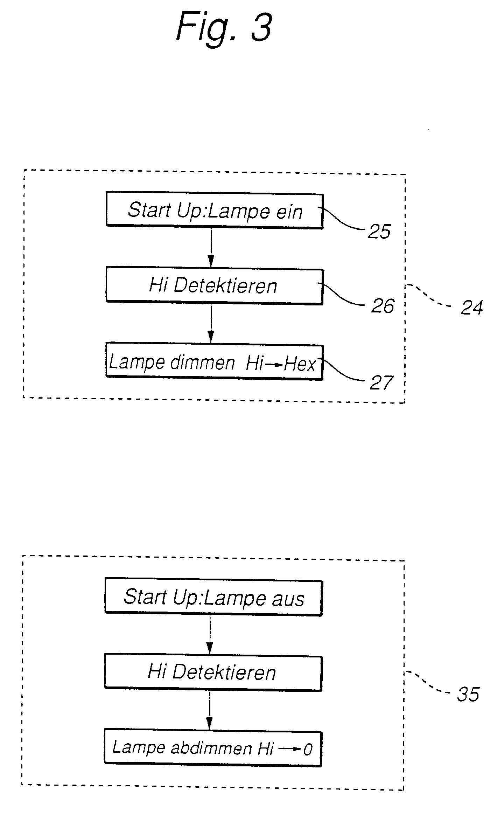

Der im Programmspeicher (9) der zentralen Beleuchtungssteuerungseinheit (1) abgelegte Verfahrensablauf, nach welchem die gedimmte Lampensteuerung jeweils in Abhängigkeit der verschiedenen vorliegenden, abgefragten Zustandsbedingungen erfolgt, wird nachfolgend anhand der Fig. 2A bis 2C sowie 3 im einzelnen beschrieben. Die Fig. 2A bis 2C zeigen hierbei jeweilige Teile des gesamten Programmablaufplans, die aneinander an den markierten Anschlußpunkten (A) und (B) anzuschließen sind.

Von dem in Fig. 2A, oben gezeigten Programmstart aus verzweigt sich das Verfahren gemäß fünf voneinander unabhängiger Fahrzeugzustände (F1 bis F5), die jeweils durch eine Mehrzahl abfragbarer Zustandsbedingungen festgelegt sind.

Der erste Fahrzeugzustand (F1) ist durch eine geöffnete Fahrzeugtür sowie geringer Innenraumhelligkeit, d.h. Unterschreiten des festgelegten Helligkeitsgrenzwerts, charakterisiert. Dieser auf der linken Hälfte der Fig. 2A dargestellte Programmteil dient dazu, daß die Innenraumbeleuchtung bei Dunkelheit gedimmt eingeschaltet wird, wenn eine Fahrzeugtüre bereits geöffnet ist oder gerade geöffnet wird.

In einem Abfrageschritt (20) wird zunächst geprüft, ob eine Tür geöffnet ist. Ist dies der Fall, wird in einem weiteren Abfrageschritt (21) abgefragt, ob eine - bei geöffnetem ansteuerbarem Schalter (6) durchzuführende - Helligkeitsmessung ein Unterschreiten des vorgegebenen Helligkeitsgrenzwertes ergibt. Bejahendenfalls werden in weiteren aufeinanderfolgenden Schritten (22, 23) eine zugehörige Einschaltdimmzeit (tdein2) sowie eine zugehörige gewünschte Endhelligkeit (He2) festgelegt, deren Werte spezifisch für diesen Fahrzeugzustand im gespeicherten Programm abgelegt sind. Dann findet ein Lampeneinschalt-Unterprogrammschritt (24) statt, der in der oberen Hälfte der Fig. 3 genauer wiedergegeben ist. Nach dem Start des Unterprogramms im Schritt (25) wird im nächsten Schritt (26) die vorliegende Isthelligkeit (Hi) detektiert und der zentralen Steuerungseinheit (1) übermittelt, und zwar vorzugsweise statt der Anordnung eines weiteren Helligkeitssensors durch die oben beschriebene, optionale, analoge Signalauswertung des Signals des bereits vorhandenen Helligkeitssensors (3), z.B. durch Vorsehen einer durch die Beleuchtungssteuerungseinheit (1) steuerbaren Umschaltmöglichkeit zwischen digitaler und analoger Signalauswertung in der Hell/ Dunkel-Signalauswertungseinheit (7). Die Steuerungseinheit (1) steuert durch die oben genannte Wahl des Austastverhältnisses des steuerbaren Schalters (6) sowie dessen zeitlicher Änderung den anschließenden Dimmvorgang im Schritt (27) zur gedimmten Aktivierung der Lampe (4) zwecks Änderung der Isthelligkeit (Hi) in die für diesen Fahrzeugzustand (F1) gewünschte Endhelligkeit (He2) (d.h. x=2 im Schritt (27)) nach einer vorprogrammierten Charakteristik. Letztere kann beispielsweise in einem in Abhängigkeit von der Zeit linearen Helligkeitsanstieg bestehen, jedoch versteht es sich, daß die Lampenaktivierung alternativ nach einer anderen gewünschten Kennlinie erfolgen kann.

Wird im Abfrageschritt (21) eine über dem Helligkeitsgrenzwert liegende Fahrzeuginnenraumhelligkeit erkannt, so findet ein weiterer Abfrageschritt (28) dahingehend statt, ob die Lampe (4) bereits eingeschaltet ist, z.B. durch Abfrage des Zustands des steuerbaren Schalters (6), und deshalb dieser Grenzwert überschritten wurde. Ist die Lampe (4) nicht eingeschaltet, so folgt daraus, daß der Helligkeitsgrenzwert durch die Umgebungshelligkeit überschritten wurde. In diesem Fall soll eine unnötige Beleuchtungsaktivierung unterbleiben und das Programm kehrt vor den ersten Abfrageschritt (20) zurück. Ist die Lampe (4) hingegen eingeschaltet, z.B. durch einen vorangegangenen Einschalt-Dimmvorgang, so wird ebenfalls der bereits beschriebene Dimmvorgang durchgeführt, wonach die Lampe (4) so leuchtet, daß sich der hier gewünschte Endhelligkeitswert (He2) ergibt. Die zusätzliche Abfrage, ob die Lampe (4) eingeschaltet ist, wenn zuvor ein Überschreiten eines vorgegebenen Helligkeitsgrenzwerts erkannt wurde, ist insbesondere deshalb sinnvoll, weil der Helligkeitssensor (3) in der Beleuchtungseinheit (2) integriert angeordnet und folglich wesentlich von der Lampenhelligkeit beeinflußt ist, und macht es möglich, die Lampe (4) auf schwächere Leuchtintensität herabzudimmen, wenn sie für den gegebenen Fahrzeugzustand zu hell leuchtet.

Der zweite beleuchtungsrelevante Fahrzeugzustand (F2) besteht aus den zwei abzufragenden Zustandsbedingungen, ob die Zentralverriegelung geöffnet wurde und nur eine geringe Helligkeit vorliegt. Dieser auf der rechten Hälfte der Fig. 2A dargestellte Programmteil dient dazu, die Innenraumbeleuchtung bei Dunkelheit für eine bestimmte Zeit variabel gedimmt einzuschalten, wenn die Zentralverriegelung geöffnet wird und nach Ablauf einer vorgegebenen Zeitverzögerung die Innenraumbeleuchtung gedimmt auszuschalten.

Im einzelnen wird im zugehörigen, auf der rechten Hälfte der Fig. 2A dargestellten Programmteil in einem ersten Abfrageschritt (29) geprüft, ob die Zentralverriegelung von ihrem geschlossenen in ihren geöffneten Zustand gebracht wurde. Wenn dies der Fall ist, wird wiederum der Abfrageschritt (21) durchgeführt, der feststellt, ob die Innenraumhelligkeit unterhalb des vorgewählten Helligkeitsgrenzwerts liegt. Bejahendenfalls werden wiederum nachfolgende Schritte (30, 31) zur Festlegung einer Einschaltdimmzeit (tdein1) sowie einer gewünschten Endhelligkeit (He1) durchgeführt. Wie zum Programmteil für den ersten Fahrzeugzustand (F1) beschrieben, wird in diese Programmfortsetzung auch eingeschwenkt, wenn zwar eine Helligkeit über dem Grenzwert erkannt, jedoch gleichzeitig eine eingeschaltete Innenraumbeleuchtung in dem folgenden Abfrageschritt (28) festgestellt wurde. Es ist zu beachten, daß die nunmehr festgelegten Werte für die Einschaltdimmzeit (tdein1) und die Endhelligkeit (He1) im Programm auf den zweiten Fahrzeugzustand (F2) angepaßt vorgegeben werden und sich demgemäß insbesondere von demjenigen anderer Fahrzeugzustände, z.B. der oben beschriebenen Einschaltdauer (tdein2) und Endhelligkeit (He2) des ersten Fahrzeugzustands (F1) unterscheiden können. Anschließend wird wiederum ein Lampeneinschalt-Unterprogramm (24a) durchgeführt, das in seinem Ablauf demjenigen des zum ersten Fahrzeugzustand (F1) beschriebenen entspricht, wobei lediglich die gegebenenfalls geänderten Eingangsparameter der Dauer des Einschaltdimmvorgangs (tdein1) und der Endhelligkeit (He1) sowie je nach Bedarf eventuell auch die Einschaltcharakteristik, d.h. der zeitliche Verlauf der Helligkeitsänderung, verschieden sind. Gleichzeitig wird in einem Schritt (32) eine Verzögerungszeit (t1) festgelegt, deren Ablauf in einem anschließenden Abfrageschritt (33) detektiert wird. Danach wird in einem Schritt (34) eine Ausschaltdimmzeit (tdaus1) festgelegt und mit diesem Dimmparameter ein Unterprogramm zum gedimmten Ausschalten der Lampe (4) im Schritt (35) ausgeführt.

Dieser Unterprogrammschritt (35) ist in der unteren Hälfte der Fig. 3 genauer dargestellt. Nach dem Starb dieses Unterprogramms wird wiederum die Isthelligkeit (Hi) im Fahrzeuginnenraum festgestellt. Die zentrale Steuerungseinheit (1) schaltet die Lampe (4) durch entsprechende Steuerung des Schalters (6) mit einem einstellbaren, gewünschten zeitlichen Verlauf gedimmt von der Isthelligkeit (Hi), die in diesem Fall der zuvor eingestellten Endhelligkeit (He1) entspricht und daher zu ihrer Feststellung nicht extra gemessen zu werden braucht, bis auf Null ab. Wiederum ist der zeitliche Verlauf dieses Abschalt-Dimmvorgangs variabel einstellbar, z.B. nach einer linearen, exponentiellen oder logarithmischen Kennlinie.

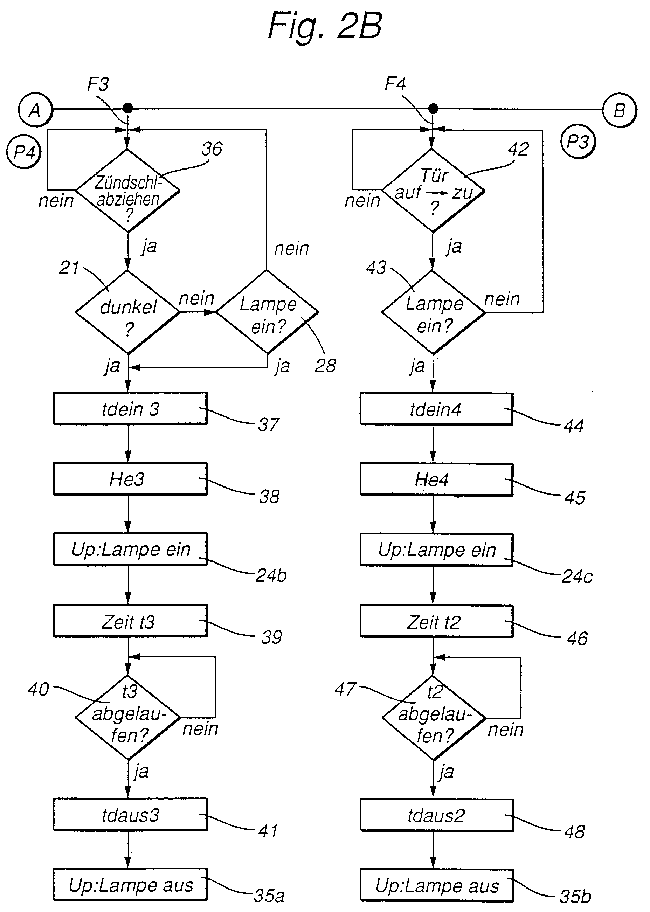

Der dritte, beleuchtungsrelevante Fahrzeugzustand (F3) beinhaltet die abfragbaren Bedingungen, ob der Zündschlüssel abgezogen wird und die Helligkeit unterhalb des vorgewählten Helligkeitsgrenzwerts liegt. Dieser in Fig. 2B links dargestellte Programmteil dient dazu, die Innenraumbeleuchtung für eine bestimmte Zeit variabel gedimmt einzuschalten, sobald der Zündschlüssel bei Dunkelheit abgezogen wird. Dies erlaubt es den Insassen, die vor dem Aussteigen erforderlichen Handlungen, z.B. Lösen des Sicherheitsgurts, bei ausreichender Helligkeit vorzunehmen. Nach Ablauf einer vorgegebenen Zeitverzögerung wird die Innenbeleuchtung variabel gedimmt ausgeschaltet.

Im einzelnen wird hierfür zunächst im Schritt (36) abgefragt, ob der Zündschlüssel abgezogen wurde. Bejahendenfalls wird anschließend der bereits oben beschriebene Helligkeitsabfrageschritt (21), an den sich, wie oben beschrieben, bei negativer Antwort der Abfrageschritt (28) über eine eingeschaltete Lampe (4) anschließt, durchgeführt. Bei entsprechender positiver Antwort werden wiederum Schritte (37, 38) zur Festlegung der für diese Fahrzeugsituation (F3) gewünschten Einschaltdimmzeit (tdein3) und Endhelligkeit (He3) ausgeführt. Mit diesen Dimmparametern wird das Lampeneinschalt-Unterprogramm (24b) analog der entsprechenden oben beschriebenen Unterprogramme (24, 24a) durchgeführt. Gleichzeitig wird im Schritt (39) eine Verzögerungszeit (t3) gesetzt, deren Ablauf mit dem rekursiven Abfrageschritt (40) geprüft wird. Ist die Verzögerungszeit (t3) abgelaufen, wird im nächsten Schritt (41) eine Ausschaltdimmzeit (tdaus3) gesetzt und mit diesem Dimmparameter ein Lampenausschalt-Unterprogramm (35a) ausgeführt, was wiederum analog zu dem zum zweiten Fahrzeugzustand (F2) gehörigen Programmteil beschriebenen Unterprogramm (35) erfolgt, wobei selbstverständlich die Ausschaltdimmzeiten bzw. der zeitliche Verlauf des Ausschaltdimmvorgangs wiederum unterschiedlich gewählt sein können.

Der vierte beleuchtungsrelevante Fahrzeugzustand (F4) beinhaltet als abfragbare Bedingungen, ob die Fahrzeugtüren geschlossen werden und die Innenraumbeleuchtung zuvor eingeschaltet war. Der in Fig. 2B auf der rechten Hälfte dargestellte, zugehörige Programmteil dient dazu, in diesem Fall die Innenraumbeleuchtung für eine bestimmte Zeitdauer auf einer bestimmten Helligkeitsstufe eingeschaltet zu lassen und nach Ablauf einer einstellbaren Zeitverzögerung das Licht variabel gedimmt auszuschalten. Hierfür werden in einem ersten Abfrageschritt (42) das Schließen der Türen und bejahendenfalls in einem nachfolgenden Abfrageschritt (43) das Eingeschaltetsein der Lampe (4) geprüft. War die Lampe (4) nicht eingeschaltet, wird kein Beleuchtungssteuerungsvorgang aktiviert. War hingegen die Lampe (4) eingeschaltet, so werden nunmehr wiederum in nachfolgenden Schritten (44, 45) die diesem Fahrzeugzustand (F4) zugehörige Einschaltdimmzeit (tdein4) und Endhelligkeit (He4) gesetzt. Mit diesen Dimmparametern wird dann der Lampeneinschalt-Unterprogrammschritt (24c), wie oben zu Schritt (24) näher beschrieben, durchgeführt. Gleichzeitig wird eine Ausschaltverzögerungszeit (t2) im Schritt (46) festgesetzt, deren Ablauf durch den gegebenenfalls wiederholt durchgeführten Zeitablauf-Abfrageschritt (47) geprüft wird. Nach Ablauf der Verzögerungszeit (t2) wird im Schritt (48) eine Ausschaltdimmzeit (tdaus2) gesetzt und mit diesem Dimmparameter anschließend ein Lampenausschalt-Unterprogrammschritt (35b) durchgeführt, wodurch die Lampe (4) gedimmt ausgeschaltet wird. Das Ausschalt-Unterprogramm (35b) verläuft wiederum analog wie das oben beschriebene Ausschalt-Unterprogramm (35), wobei lediglich die Dimmparameter, d.h. die Ausschaltdimmzeit und die Ausschaltdimmkennlinie, gegebenenfalls modifiziert sind.

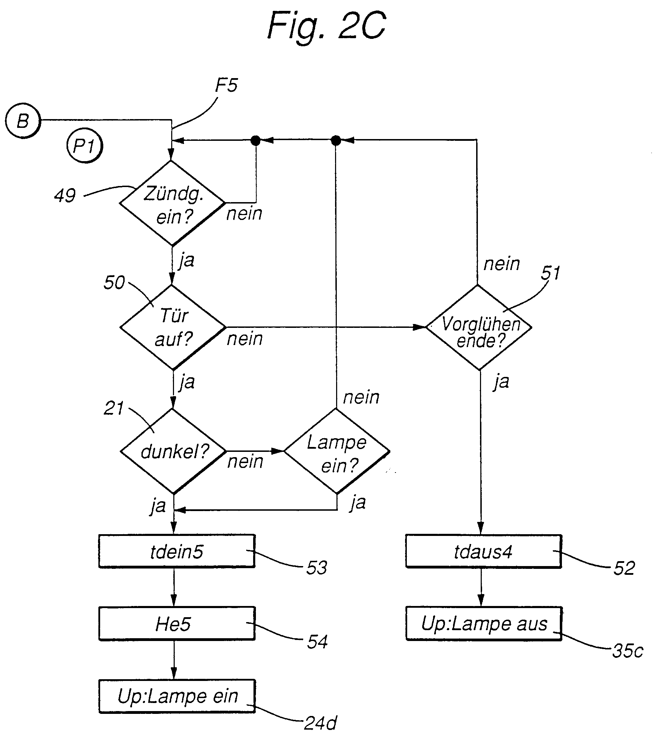

Der fünfte Fahrzeugzustand (F5) beinhaltet die abfragbaren Bedingungen, ob die Zündung eingeschaltet wird und eine Fahrzeugtür geöffnet ist. Bejahendenfalls wird dann bei Dunkelheit ein Einschaltdimmvorgang aktiviert. Ist die Tür hingegen geschlossen, wird nach dem Ende eines Diesel-Vorglühvorgangs abgefragt und bei positiver Antwort ein Ausschaltdimmvorgang ausgelöst. Dieser zugehörige Programmteil ist in Fig. 2C dargestellt. Er dient zum einen dazu, den Fahrzeuginnenraum bei eingeschalteter Zündung und geöffneter Fahrertür bei Dunkelheit zu beleuchten. Zum anderen wird nach dem Einschalten der Zündung und geschlossener Fahrzeugtüren die eventuell aktivierte Innenraumbeleuchtung gedimmt ausgeschaltet, jedoch erst nachdem der Vorglühvorgang beendet ist. Dadurch kann der Fahrer einsteigen, die Türen schließen, die Zündung einschalten und damit den Vorglühvorgang einleiten und dennoch bis zum gedimmten Ausschalten der Innenraumbeleuchtung bei noch aktivierter Beleuchtung die erforderlichen weiteren Handlungen vor dem Fahrtantritt vornehmen, z.B. das Gurtschloß suchen und den Sicherheitsgurt anlegen. Die Innenraumbeleuchtung erlischt dann erst nach Beendigung des Vorglühvorgangs.

Im einzelnen wird bei diesem Programmteil zunächst im ersten Abfrageschritt (49) geprüft, ob die Zündung eingeschaltet wurde. Ist dies der Fall, wird im nächsten Abfrageschritt (50) der Türzustand erfaßt. Sind die Türen geschlossen, fährt das Programm mit dem Abfrageschritt (51) nach dem Ende des Vorglühvorgangs fort. Ist dies noch nicht der Fall, kehrt das Programm in einer Schleife vor den Abfrageschritt (49) für den Zustand der Zündung zurück. Sobald jedoch die Beendigung des Vorglühvorgangs im Schritt (51) erkannt wurde, wird im Schritt (52) eine zugehörige Ausschaltdimmzeit (tdaus4) gesetzt und mit diesem Dimmparameter sowie einer vorgegebenen Ausschaltdimmcharakteristik wiederum ein zu den oben beschriebenen analoger Lampenausschalt-Unterprogrammschritt (35c) durchgeführt.

Wird hingegen im Abfrageschritt (50) für den Türzustand eine geöffnete Tür festgestellt, so wird mit dem Helligkeitsabfrageschritt (21) fortgesetzt. Liegt die Innenraumhelligkeit unter dem vorgewählten Helligkeitsgrenzwert, so schließt sich ein Einschaltdimmvorgang an, der aus dem Festsetzen einer Einschaltdimmzeit im Schritt (53) sowie einer zugehörigen, gewünschten Endhelligkeit (He5) im Schritt (54) sowie dem mit diesen Dimmparametern durchgeführten Lampeneinschalt-Unterprogramm (24d) besteht, das in analoger Weise wie das oben beschriebene Lampeneinschalt-Unterprogramm (24) ausgeführt wird.

Den fünf, sich parallel an den Startpunkt des Verfahrens anschließenden, jeweils einem der beleuchtungsrelevanten Fahrzeugzustände (F1 bis F5) zugeordneten Programmteilen ist eine Rangfolge ihrer Durchführung zugeordnet, was in den Fig. 2A bis 2C durch Angabe von Prioritäten (P1) bis (P5) angezeigt ist. Hierbei bedeutet (P1) die höchste und (P5) die niedrigste Priorität, zwischen denen stufenweise die übrigen Prioritäten (P2, P3, P4) liegen. Sobald die Bedingungen eines beleuchtungsrelevanten Fahrzeugzustands höherer Priorität vorliegen, wird der zugehörige Programmteil ausgeführt, wobei ein gegebenenfalls bereits laufendes Programm für einen anderen beleuchtungsrelevanten Fahrzeugzustand niedrigerer Priorität abgebrochen wird.

Aus der obigen Beschreibung des Steuerungsverfahrens für die Innenraumbeleuchtung ergibt sich, daß jeweils ein auf einen ganz bestimmten Fahrzeugzustand abgestimmter Steuerungsvorgang für die Innenraumbeleuchtung durchführbar ist. Insbesondere erfolgt die Aktivierung der Innenraumbeleuchtung jeweils gedimmt unter Vorgabe einer auf den jeweiligen Fahrzeugzustand abgestimmten Ein- bzw. Ausschaltdimmzeit sowie einer gewünschten Endhelligkeit im Falle eines Einschaltvorgangs. Des weiteren läßt sich die Kennlinie, nach der sich der zeitliche Verlauf des Dimmvorgangs richtet, in geeigneter Weise spezifisch für den jeweiligen Fahrzeugzustand vorgeben. So ist es beispielsweise möglich, die Innenbeleuchtung mit maximaler Lampenhelligkeit anzuschalten, wenn die Tür bei abgeschalteter Zündung in der Dunkelheit geöffnet wird, die Innenraumbeleuchtung hingegen mit einer geringeren Helligkeit einzuschalten, wenn die Tür bei eingeschalteter Zündung geöffnet wird, um den Fahrer nicht zu blenden. Letzteres geschieht, wenn der Programmteil für den fünften Fahrzeugzustand mit der höchsten Priorität (P1) ausgeführt wird, wobei die zugehörige Endhelligkeit (He5) kleiner als die maximale Lampenhelligkeit gewählt wird. Ist hingegen die Zündung bei sich öffnender Tür abgeschaltet, so wird der Programmteil für den ersten Fahrzeugzustand (F1), der die zweithöchste Priorität (P2) hat, ausgeführt, wobei die gewünschte Endhelligkeit (He2) auf die maximale Lampenhelligkeit gesetzt wird.

Wird, als weiteres Beispiel der Variabilität des Innenraumbeleuchtungs-Steuerungsverfahrens, die Tür bei abgeschalteter Zündung geschlossen, so wird der Programmteil des vierten Fahrzeugzustands (F4) mit der dritthöchsten Priorität (P3) ausgeführt, der am Ende zu einem Abschaltdimmvorgang führt. Durch Wahl einer verhältnismäßig großen Auschaltdimmzeit (tdaus2) läßt sich dieses Abdimmen bei ausgeschalteter Zündung mit geringer Geschwindigkeit ausführen. Wird die Tür hingegen bei eingeschalteter Zündung geschlossen, sollte, um den Fahrer nicht zu blenden, dieses langsame Abdimmen abgebrochen und die Innenraumbeleuchtung nach beendetem Vorglühvorgang sehr schnell gedimmt ausgeschaltet werden. Dies wird dadurch erreicht, daß beim Einschalten der Zündung der Programmteil für den fünften Fahrzeugzustand (F5) aufgrund seiner höheren Priorität (P1) den zum vierten Fahrzeugzustand (F4) gehörigen Programmablauf unterbricht und über die Abfrageschritte (49, 50 und 51) einen schnellen Ausschaltdimmvorgang initiiert, wozu die zugehörige Ausschaltdimmzeit (tdaus4) auf einen sehr kleinen Wert gesetzt wird.

Für den Fachmann sind eine Vielzahl weiterer Variationen des oben beschriebenen Verfahrens und der oben beschriebenen Vorrichtung zur Steuerung der Fahrzeuginnenraumbeleuchtung im Rahmen der Erfindung möglich. Beispielsweise kann auf einen oder mehrere der dargestellten fünf beleuchtungsrelevanten Fahrzeugzustände für die Innenraumbeleuchtungssteuerung verzichtet werden. Wird eine entsprechende Komforteinbuße in Kauf genommen, kann des weiteren auf die Hell/Dunkel-Erkennung verzichtet werden, wodurch der Helligkeitssensor und die Verarbeitung von dessen Sensorsignal entfällt und die Lampenansteuerung unabhängig von der vorliegenden Innenraumhelligkeit wird.

## Patentansprüche

1. Verfahren zur Steuerung einer Fahrzeuginnenraumbeleuchtung, bei dem
- eine Mehrzahl von jeweils durch wenigstens eine abfragbare Zustandsbedingung festgelegten, beleuchtungsrelevanten Fahrzeugzuständen überwacht und bei detektiertem Vorliegen eines der Fahrzeugzustände ein zugehöriger Steuerungsvorgang zum Ein- und/oder Ausschalten der Innenraumbeleuchtung aktiviert wird,
**dadurch gekennzeichnet,**
daß
- das jeweilige Ein- und/oder Ausschalten gedimmt erfolgt, wobei die den jeweiligen Dimmvorgang bestimmenden Dimmparameter in Abhängigkeit von dem detektierten, den Steuerungsvorgang aktivierenden Fahrzeugzustand vorgegeben werden.

2. Verfahren nach Anspruch 1, weiter
**dadurch gekennzeichnet,**
daß wenigstens einer der Fahrzeugzustände durch eine Kette von mehreren abfragbaren Zustandsbedingungen festgelegt ist und nur dann vorliegt, wenn alle diese Zustandsbedingungen erfüllt sind.

3. Verfahren nach Anspruch 1 oder 2, weiter
**dadurch gekennzeichnet,**
daß für den Steuerungsvorgang zum Ausschalten der Innenraumbeleuchtung als ein Dimmparameter die Ausschaltdimmzeit fahrzeugzustandsabhängig vorgegeben wird.

4. Verfahren nach einem der Ansprüche 1 bis 3, weiter
**dadurch gekennzeichnet,**
daß für den Steuerungsvorgang zum Ausschalten der Innenraumbeleuchtung als ein Dimmparameter eine den Beginn des Abdimmvorgangs verzögernde Verzögerungszeit fahrzeugzustandsabhängig vorgegeben wird.

5. Verfahren nach einem der Ansprüche 1 bis 4, weiter
**dadurch gekennzeichnet,**
daß für den Steuerungsvorgang zum Einschalten der Innenbeleuchtung als Dimmparameter die Einschaltdimmzeit sowie die Endhelligkeit vorgegeben werden.

6. Verfahren nach einem der Ansprüche 1 bis 5, weiter
**dadurch gekennzeichnet,**
daß die beleuchtungsrelevanten Fahrzeugzustande nach einer Rangfolge bezüglich der Aktivierung eines Innenraumbeleuchtungs-Steuerungsvorgangs geordnet werden.

7. Verfahren nach einem der Ansprüche 2 bis 6, weiter
**dadurch gekennzeichnet**,
daß eine Zustandsbedingung für jeden der beleuchtungsrelevanten Fahrzeugzustände darin besteht, daß die gemessene Fahrzeuginnenraumhelligkeit unterhalb eines vorgegebenen Grenzwertes liegt.

8. Vorrichtung zur Durchführung des Verfahrens nach einem der Ansprüche 1 bis 7,
**gekennzeichnet durch**
- eine zentrale Beleuchtungssteuerungseinheit (1) mit einem den Progammablauf des Verfahrens enthaltenden Programmspeicher (9),
- eine die Bedingungen für die beleuchtungsrelevanten Fahrzeugzustände abfragenden Sensorgruppe (10), deren Ausgangssignale der Beleuchtungssteuerungseinheit zugeführt sind,
- eine Beleuchtungseinrichtung (4) und
- einen von der Beleuchtungssteuerungseinheit ansteuerbaren Schalter (6) zur Aktivierung und Deaktivierung der Beleuchtungseinrichtung.

9. Vorrichtung nach Anspruch 8, weiter
**gekennzeichnet durch**
- einen die Fahrzeuginnenraumhelligkeit erfassenden Helligkeitssensor (3), dessen Ausgangssignal der Beleuchtungssteuerungseinheit (1) als eine Information zur Ansteuerung des Schalters (6) dient.

10. Vorrichtung nach Anspruch 9, weiter
**gekennzeichnet durch**
- eine Hell/Dunkel-Signalauswertungseinheit (7), welcher das Signal des Helligkeitssensors (3) zugeführt ist und welche Mittel (13) zur Einstellung eines Helligkeitsgrenzwerts aufweist sowie daraus ein digitales Helligkeitssignal erzeugt, das der Beleuchtungssteuerungseinheit (1) zugeführt ist.

11. Vorrichtung nach Anspruch 9 oder 10, weiter
**dadurch gekennzeichnet,**
daß der Helligkeitssensor (3) und die Beleuchtungseinrichtung (4) über dieselbe Verbindungsleitung (5) mit der Beleuchtungssteuerungseinheit (1) verbunden sind, wobei bei geschlossen angesteuertem Schalter (6) die Beleuchtungseinrichtung aktiviert und bei geöffnet angesteuertem Schalter das Ausgangssignal des Helligkeitssensors übertragen wird.

## Claims

1. System for the control of the interior lighting of a vehicle, in which,
- a number of vehicle states relevant to lighting are monitored, each such state being established by interrogation of at least one condition-requirement and such that if the presence of any such vehicle state is detected, an associated control process for illuminating and/or extinguishing the interior lighting is activated,
**characterized in that**
- the respective illuminating and/or extinguishing process takes place by dimmer operation such that the dimming parameters determining the dimmer operation in each case are preselected in relation to the vehicle state whose detection activates the control process.

2. System according to Claim 1, further
**characterized in that**
at least one of the vehicle states is established by a chain of interrogated condition-requirements and is only confirmed when all these condition-requirements are satisfied.

3. System according to Claims 1 or 2, further
**characterized in that**
as a dimming parameter of the control process for extinguishing the interior lighting, the dimmer operation time for extinction is preselected in relation to the vehicle state.

4. System according to any of Claims 1 to 3, further
**characterized in that**
as a dimming parameter of the control process for extinguishing the interior lighting, a delay time by which the beginning of the dimmer operation process is postponed, is preselected in relation to the vehicle state.

5. System according to any of Claims 1 to 4, further
**characterized in that**
as dimming parameters of the control process for illuminating the interior lighting, the dimmer operation time for illumination and the final brightness level are preselected.

6. System according to any of Claims 1 to 5, further
**characterized in that**
the lighting-relevant vehicle states are ordered in a sequence of priority relative to the activation of an interior lighting control process.

7. System according to any of Claims 2 to 6, further
**characterized in that**
a condition-requirement for each of the lighting-relevant vehicle states consists in the fact that the measured brightness level of the vehicle interior is below a preselected threshold value.

8. Device to implement the system according to any of Claims 1 to 7,
**characterized in that** it comprises
- a central lighting control unit (1) with a program memory (9) in which the program sequence of the system is stored,
- a group of sensors (10) to interrogate for the conditions corresponding to the lighting-relevant vehicle states, whose output signals are transmitted to the lighting control unit,
- a lighting device (4), and
- a switch (6) controlled by the lighting control unit, to activate and deactivate the lighting device.

9. Device according to Claim 8, further
**characterized in that**
- it comprises a brightness sensor (3) which senses the brightness of the vehicle interior and whose output signal is transmitted to the lighting control unit (1) as information serving to control the switch (6).

10. Device according to Claim 9, further
**characterized in that**
- it comprises a bright/dark signal evaluation unit (7) to which the signal from the brightness sensor (3) is transmitted, which possesses means (13) of preselecting a threshold brightness value and from which a digital brightness signal is produced and transmitted to the lighting control unit (1).

11. Device according to Claim 9, further
**characterized in that**
the brightness sensor (3) and the lighting device (4) are connected to the lighting control unit (1) by one and the same connection lead (5), such that when the controlled switch (6) is closed the lighting device is activated, and when the controlled switch is open the output signal from the brightness sensor is transmitted.

## Revendications

1. Procédé de commande d'un éclairage de l'habitacle d'un véhicule, dans le cas duquel -
- on surveille une pluralité d'états du véhicule, pertinents pour l'éclairage, chacun défini par au moins une condition d'état pouvant faire l'objet d'une interrogation, et, en cas de présence détectée de l'un de ces états du véhicule, on active un processus de commande correspondant pour l'allumage et/ou l'extinction de l'éclairage de l'habitacle,
caractérisé
- par le fait que l'allumage et/ou l'extinction respectif se fait avec variation progressive, les paramètres de variation déterminant le processus de variation progressive respectif étant prescrits en fonction de l'état détecté du véhicule, qui active le processus de commande.

2. Châssis selon la revendication 1,
caractérisé
par le fait qu'au moins l'un des états du véhicule est défini par une chaîne de plusieurs conditions d'état pouvant faire l'objet d'une interrogation et ne se présente que lorsque toutes ces conditions d'état sont remplies.

3. Procédé selon la revendication 1 ou 2,
caractérisé en outre
par le fait que, pour le processus de commande pour l'extinction de l'éclairage de l'habitacle, c'est la durée de la variation progressive pour l'extinction qui est prescrite, en fonction de l'état du véhicule, comme paramètre de la variation progressive.

4. Procédé selon l'une des revendications 1 à 3,
caractérisé en outre
par le fait que pour le processus de commande pour l'extinction de l'éclairage de l'habitacle c'est une durée de retardement, retardant le début du processus de variation progressive pour l'extinction, qui est prescrite, en fonction de l'état du véhicule, comme paramètre de la variation progressive.

5. Procédé selon l'une des revendications 1 à 4,
caractérisé en outre
par le fait que pour le processus de commande pour l'allumage de l'éclairage intérieur c'est la durée de la variation progressive pour l'allumage ainsi que l'éclairement final qui sont prescrits comme paramètres de la variation progressive.

6. Procédé selon l'une des revendications 1 à 5,
caractérisé en outre
par le fait que les états du véhicule pertinents pour l'éclairage sont, en ce qui concerne l'activation d'un processus de commande de l'éclairage de l'habitacle, rangés selon une certaine priorité.

7. Procédé selon l'une des revendications 2 à 6,
caractérisé en outre
par le fait qu'une condition d'état pour chacun des états du véhicule pertinents pour l'éclairage consiste en ce que l'éclairement, mesuré, de l'habitacle du véhicule se situe en dessous d'une valeur limite prescrite.

8. Dispositif pour la mise en oeuvre du procédé conforme à
l'une des revendications 1 à 7, caractérisé par
- une unité centrale de commande d'éclairage (1) présentant une mémoire de programmation (9) contenant le déroulement du programme du procédé,
- un groupe de détecteurs (10) qui interroge au sujet des conditions pour les états du véhicule pertinents pour l'éclairage et dont les signaux de sortie sont envoyés à l'unité de commande d'éclairage,
- un luminaire (4) et
- un commutateur (6), qui peut être commandé par l'unité de commande d'éclairage, pour activer et désactiver le luminaire.

9. Dispositif selon la revendication 8,
caractérisé en outre par
- un capteur d'éclairement (3) qui saisit l'éclairement de l'habitacle du véhicule et dont le signal de sortie sert à l'unité de commande d'éclairage (1) comme information pour commander le commutateur (6).

10. Dispositif selon la revendication 9,
caractérisé en outre par
- une unité (7) de traitement du signal éclairé/sombre, à laquelle est amené le signal du détecteur d'éclairement (3) et qui présente des moyens (13) pour prescrire une valeur limite d'éclairement et, à partir de cela, produit un signal numérique d'éclairement qui est envoyé à l'unité de commande d'éclairage (1).

11. Dispositif selon la revendication 9 ou 10,
caractérisé en outre
par le fait que le capteur d'éclairement (3) et le luminaire (4) sont reliés à l'unité de commande d'éclairage (1) par le même ligne de liaison (5), étant précisé que, le commutateur (6) étant commandé fermé, le luminaire est activé et, le commutateur étant commandé ouvert, le signal de sortie est transmis au capteur d'éclairement.
